# EUROPEAN PATENT APPLICATION

(11) **EP 4 543 020 A1**
(43) Date of publication of application: **23.04.2025**
(21) Application number: 23917254.7
(22) Date of filing: 07.12.2023
(51) Int. Cl.: H04N 21/433

(54) **VIDEO PROCESSING METHOD, APPARATUS AND DEVICE, AND STORAGE MEDIUM**

(30) Priority: 18.01.2023 CN 202310079341
(71) Applicant: Beijing Zitiao Network Technology Co., Ltd., Beijing 100190 (CN)
(72) Inventor: ZENG, Zhizheng, Beijing 100028 (CN); TANG, Yuxi, Beijing 100028 (CN)
(74) Representative: Isarpatent
(86) International application number: PCT/CN2023/137245
(87) International publication number: WO 2024/152786

(57) **Abstract**

The present disclosure provides a video processing method, apparatus, device, and a storage medium. The method includes: determining whether a video to be played in a current video stream carries a target video identification, wherein the target video identification is configured to identify a video that has been favorited by a current user and a playback progress for which has not reached a preset progress; and displaying identification information corresponding to the target video identification on a video playback page of the video to be played in response to determining that the video to be played carries the target video identification, wherein the identification information is configured to prompt that the video to be played is a video that has been favorited by the current user and the playback progress for which has not reached the preset progress. Evidently, according to the embodiment of the present disclosure, the video that has been favorited by the user and the playback progress for which has not reached the preset progress can be displayed to the user based on the current video stream. Compared with an access method for the above type of video in the prior art, the embodiment of the present disclosure enriches the method for the user to access this type of video, thereby enhancing video playback experience of the user.

## Description

This application claims priority to Chinese Patent Application No. 202310079341.1, entitled "VIDEO PROCESSING METHOD, APPARATUS, DEVICE, AND STORAGE MEDIUM", filed with the China National Intellectual Property Administration on January 18, 2023, the disclosure of which is incorporated by reference in its entirety.

### FIELD

The present disclosure relates to the field of data processing, and in particular, to a video processing method, apparatus, device, and a storage medium.

### BACKGROUND

With the continuous development of video processing technology, demands of people for video-related functions have become increasingly diverse. In the prior art, the method for accessing videos that have been favorited by current users but not finished watching is relatively limited, primarily involving re-accessing through a user personal homepage to the videos that have been favorited by current users but not finished watching.

Therefore, how to enrich the method for the users to access the videos that have been favorited but not finished watching, so as to enhance video playback experience of the users, is a technical problem that urgently needs to be solved.

### SUMMARY

In order to solve the above technical problem, embodiments of the present disclosure provide a video processing method.

In a first aspect, the present disclosure provides a video processing method. The method includes:
determining whether a video to be played in a current video stream carries a target video identification, where the target video identification is configured to identify a video that has been favorited by a current user and a playback progress for which has not reached a preset progress; and
displaying identification information corresponding to the target video identification on a video playback page of the video to be played in response to determining that the video to be played carries the target video identification, where the identification information is configured to prompt that the video to be played is a video that has been favorited by the current user and the playback progress for which has not reached the preset progress.

In an optional implementation, the identification information is displayed on a preset control, and the method further includes:
jumping from the video playback page of the video to be played to a personal homepage of the current user in response to a trigger operation on the preset control, where the personal homepage displays the video that has been favorited by the current user.

In an optional implementation, the method further includes:
displaying a video cover of the video to be played at a preset playback position of the video playback page of the video to be played in response to determining that the video to be played carries the target video identification; and
jumping from the video playback page of the video to be played to the personal homepage of the current user in response to a trigger operation on the video cover, where the personal homepage displays the video that has been favorited by the current user.

In an optional implementation, the method further includes:
acquiring a playback progress of the video to be played for the current user in response to determining that the video to be played carries the target video identification; and
resuming playback of the video to be played based on the playback progress.

In an optional implementation, the method further includes:
acquiring a playback progress of the video to be played for the current user in response to determining that the video to be played carries the target video identification; and
displaying a node identification corresponding to the playback progress on a playback progress bar of the video to be played, where the node identification is configured to prompt the playback progress of the video to be played for the current user.

In an optional implementation, after the acquiring a playback progress of the video to be played for the current user, the method further includes:
displaying progress prompt information corresponding to the playback progress of the video to be played for the current user on the video playback page of the video to be played.

In an optional implementation, after the jumping from the video playback page of the video to be played to a personal homepage of the current user, the method further includes:
displaying a preset first state identification on the personal homepage of the current user for the video that has been favorited by the current user and the playback progress for which has not reached the preset progress, where the preset first state identification is configured to prompt that the playback progress of the current user for the video does not reach the preset progress.

In an optional implementation, after the jumping from the video playback page of the video to be played to a personal homepage of the current user, the method further includes:
displaying a preset second state identification on the personal homepage of the current user for the video to be played, where the preset second state identification is configured to prompt playback time information of the current user for the video to be played..

In a second aspect, the present disclosure provides a video processing apparatus. The apparatus includes:
a determination module, configured to determine whether a video to be played in a current video stream carries a target video identification, where the target video identification is configured to identify a video that has been favorited by a current user and a playback progress for which has not reached a preset progress; and
a first display module, configured to display identification information corresponding to the target video identification on a video playback page of the video to be played in response to determining that the video to be played carries the target video identification, where the identification information is configured to prompt that the video to be played is a video that has been favorited by the current user and the playback progress for which has not reached the preset progress.

In a third aspect, the present disclosure provides a computer-readable storage medium, having instructions stored therein. The instructions, when running on a terminal device, cause the terminal device to implement the above method.

In a fourth aspect, the present disclosure provides a video processing device, including a memory, a processor, and a computer program stored on the memory and runnable on the processor. The processor, when executing the computer program, implements the above method.

In a fifth aspect, the present disclosure provides a computer program product. The computer program product includes a computer program/instruction. The computer program/instruction, when executed by a processor, implements the above method.

Compared with the prior art, the technical solutions provided in the embodiments of the present disclosure at least have the following advantages:
according to the video processing method provided in the embodiments of the present disclosure, firstly, whether the video to be played in the current video stream carries the target video identification is determined, where the target video identification is configured to identify the video that has been favorited by the current user and the playback progress for which has not reached the preset progress; and in response to determining that the video to be played carries the target video identification, the identification information corresponding to the target video identification is displayed on the video playback page of the video to be played, where the identification information is configured to prompt that the video to be played is a video that has been favorited by the current user and the playback progress for which has not reached the preset progress. Evidently, according to the embodiments of the present disclosure, the video that has been favorited by the user and the playback progress for which has not reached the preset progress can be displayed to the user based on the current video stream. Compared with an access method for the above type of video in the prior art, the embodiments of the present disclosure enrich the method for the user to access this type of video, thereby enhancing video playback experience of the user.

### BRIEF DESCRIPTION OF THE DRAWINGS

The accompanying drawings herein are incorporated into the specification to form a part of the specification, illustrate embodiments conforming to the present disclosure, and are used to explain the principle of the present disclosure together with the specification.

In order to describe the technical solutions in the embodiments of the present disclosure or in the prior art more clearly, the accompanying drawings required to be used in descriptions of the embodiments or the prior art will be briefly introduced below, and it is apparent that those of ordinary skill in the art may also obtain other accompanying drawings according to these accompanying drawings without creative work.
FIG. 1 is a flowchart of a video processing method according to an embodiment of the present disclosure;
FIG. 2 is a schematic diagram of a video playback page according to an embodiment of the present disclosure;
FIG. 3 is a schematic diagram of a video playback page according to an embodiment of the present disclosure;
FIG. 4 is a schematic diagram of a personal homepage according to an embodiment of the present disclosure;
FIG. 5 is a schematic diagram of a video playback page according to an embodiment of the present disclosure;
FIG. 6 is a schematic diagram of a structure of a video processing apparatus according to an embodiment of the present disclosure; and
FIG. 7 is a schematic diagram of a structure of a video processing device according to an embodiment of the present disclosure.

### DETAILED DESCRIPTION OF EMBODIMENTS

To have a more clear understanding of the above objectives, features, and advantages of the present disclosure, the solution of the present disclosure is further described below. It should be noted that the embodiments and the features of the embodiments in the present disclosure may be mutually combined without conflicts.

Many specific details are elaborated in the following description to facilitate a full understanding of the present disclosure, but the present disclosure may also be implemented in methods different from those described herein. Apparently, the embodiments in the specification are only a part rather all of the embodiments of the present disclosure.

With the continuous development of video processing technology, demands of people for video-related functions have become increasingly diverse. In the prior art, the method for accessing videos that have been favorited by current users but not finished watching is relatively limited, primarily involving re-accessing through a user personal homepage to the videos that have been favorited by current users but not finished watching.

Therefore, how to enrich the method for the users to access the videos that have been favorited but not finished watching, so as to enhance video playback experience of the users, is a technical problem that urgently needs to be solved.

Accordingly, an embodiment of the present disclosure provides a video processing method. Firstly, whether a video to be played in a current video stream carries a target video identification is determined, where the target video identification is configured to identify a video that has been favorited by the current user and a playback progress for which has not reached a preset progress; and in response to determining that the video to be played carries the target video identification, identification information corresponding to the target video identification is displayed on a video playback page of the video to be played, where the identification information is configured to prompt that the video to be played is a video that has been favorited by the current user and the playback progress for which has not reached the preset progress. Evidently, according to the embodiment of the present disclosure, the video that has been favorited by the user and the playback progress for which has not reached the preset progress can be displayed to the user based on the current video stream. Compared with the access method for the above type of video in the prior art, the embodiment of the present disclosure enriches the method for the user to access this type of video, thereby enhancing the video playback experience of the user.

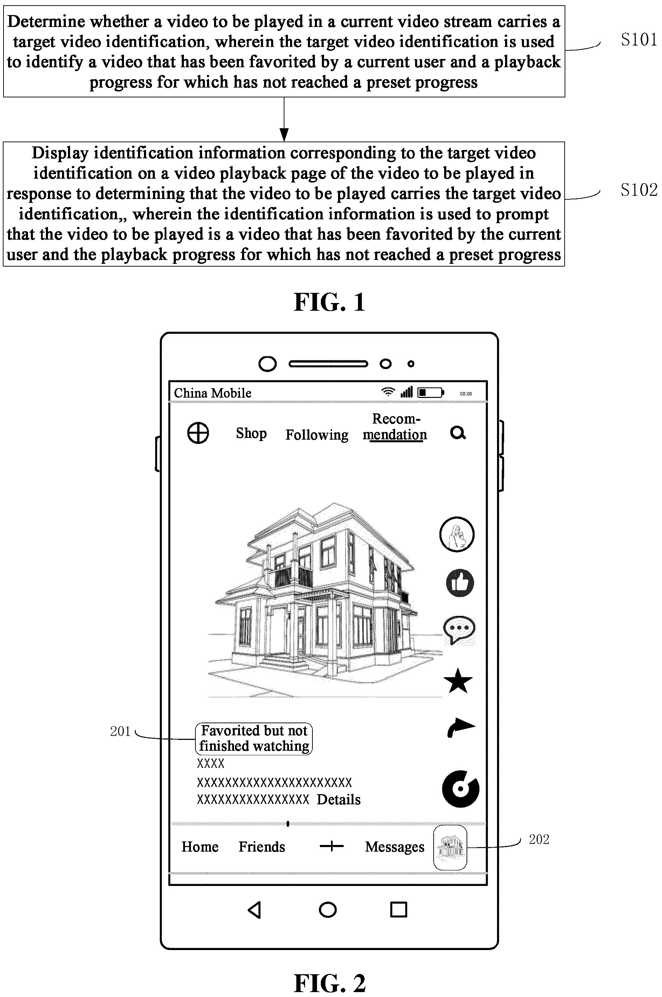

Based on this, an embodiment of the present disclosure provides a video processing method, applied to a client. Referring to FIG. 1, which is a flowchart of a video processing method according to an embodiment of the present disclosure, the method includes:
S101: Determine whether a video to be played in a current video stream carries a target video identification.

The target video identification is configured to identify a video that has been favorited by a current user and a playback progress for which has not reached a preset progress.

The video processing method provided in the embodiment of the present disclosure may be applied to a client. For example, the client may include a client deployed on a smartphone, a client deployed on a tablet, etc.

In the embodiment of the present disclosure, the current video stream may include one or more videos, and the video to be played is any one of the above videos.

In an optional implementation, the current video stream may include a current recommended video stream. The current recommended video stream includes one or more recommended videos determined for the current user. The video to be played belongs to the recommended videos.

In the embodiment of the present disclosure, based on the current recommended video stream, the video that has been favorited by the current user and has not reached the preset playback progress is displayed to the current user, such that the current user can re-access to this type of video based on the recommended video stream, thereby increasing the opportunities for the current user to access this type of video and then enriching the video playback experience of the user.

In the embodiment of the present disclosure, the target video identification is configured to identify the video that has been favorited by the current user and the playback progress for which has not reached the preset progress, meaning that the video has been favorited in favorites of the current user, and the viewing progress of the current user for the video does not reach the preset progress.

For example, assuming that the favorites of the current user include a video A and a video B, where the video A has a total duration of 10 minutes, the current user has watched the video A for 2 minutes, and therefore the playback progress for the video A may be represented as 2 ÷ 10 × 100% = 20%. Apparently, the playback progress for the video A does not reach the preset progress of 40%.

In an optional implementation, the video carrying the target video identification may include a video that has been favorited within a preset duration range. For example, a video that has been favorited within the past 2 to 14 days may be determined as the video carrying the target video identification.

In another optional implementation, the video carrying the target video identification may include a video that has been favorited by the current user but is not played.

In another optional implementation, the video carrying the target video identification may include a video that has been favorited by the current user and has a total duration greater than the preset duration. For example, assuming that the preset duration is 1 minute, a video in the favorites of the current user that has a total duration greater than 1 minute may be determined as the video carrying the target video identification.

S102: In response to determining that the video to be played carries the target video identification, display identification information corresponding to the target video identification on a video playback page of the video to be played.

The identification information is configured to prompt that the video to be played is a video that has been favorited by the current user and the playback progress for which has not reached the preset progress.

In the embodiment of the present disclosure, the identification information corresponding to the target video identification may be displayed at a preset position on the video playback page of the video to be played, thereby prompting the current user that the video has been favorited by the current user and the playback progress for which has not reached the preset progress.

As shown in FIG. 2, FIG. 2 is a schematic diagram of a video playback page according to an embodiment of the present disclosure. When it is determined that a video to be played carries a target video identification, identification information 201 corresponding to the target video identification is displayed on the video playback page of the video to be played, where the identification information 201 displays a text "Favorited but not finished watching", which is configured to prompt the current user that the video has been favorited by the current user and a playback progress for which has not reached a preset progress.

According to the video processing method provided in the embodiment of the present disclosure, firstly, whether the video to be played in a current video stream carries the target video identification is determined, where the target video identification is configured to identify the video that has been favorited by the current user and the playback progress for which has not reached the preset progress; and in response to determining that the video to be played carries the target video identification, the identification information corresponding to the target video identification is displayed on the video playback page of the video to be played, where the identification information is configured to prompt that the video to be played is a video that has been favorited by the current user and the playback progress for which has not reached the preset progress. Evidently, according to the embodiment of the present disclosure, the video that has been favorited by the user and the playback progress for which has not reached the preset progress can be displayed to the user based on the current video stream. Compared with the access method for the above type of video in the prior art, the embodiment of the present disclosure enriches the method for the user to access this type of video, thereby enhancing the video playback experience of the user.

In practical applications, to further enrich the method for the user to access the video that has been favorited by the user and the playback progress for which has not reached the preset progress and enhance the video playback experience of the user, the identification information corresponding to the target video identification may also be displayed on a preset control, and then through a trigger operation on the preset control, the video playback page of the video to be played jumps to a personal homepage of the current user.

In the embodiment of the present disclosure, the preset control displays the identification information, and when the trigger operation on the preset control is received, the video playback page of the video to be played jumps to the personal homepage of the current user, where the personal homepage of the current user displays a video that has been favorited by the current user.

In the embodiment of the present disclosure, the trigger operation on the preset control may include operations such as a tap operation and a long-pressing operation on the preset control.

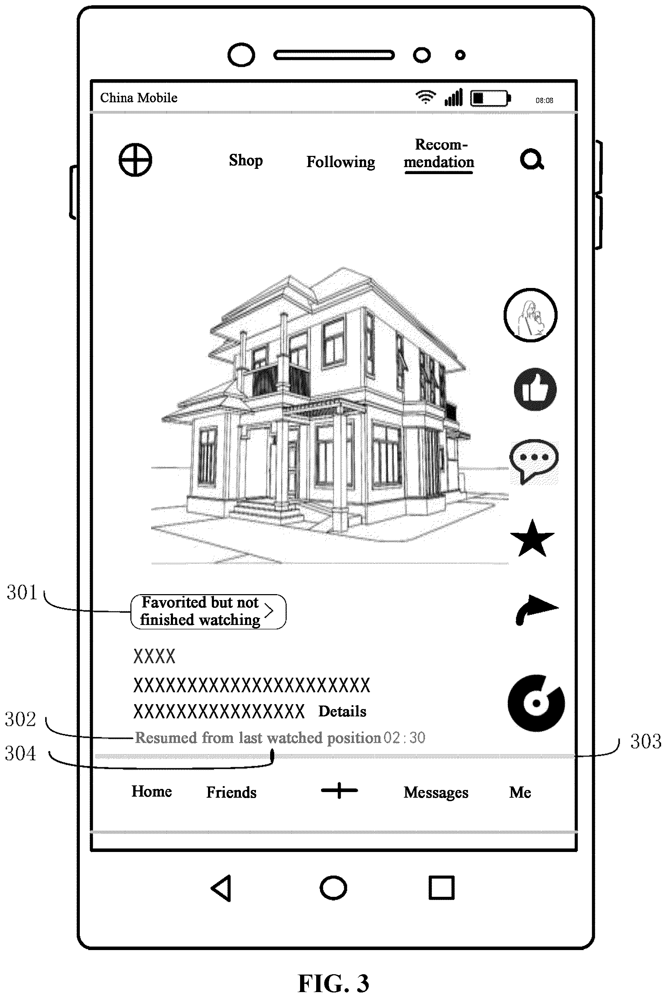

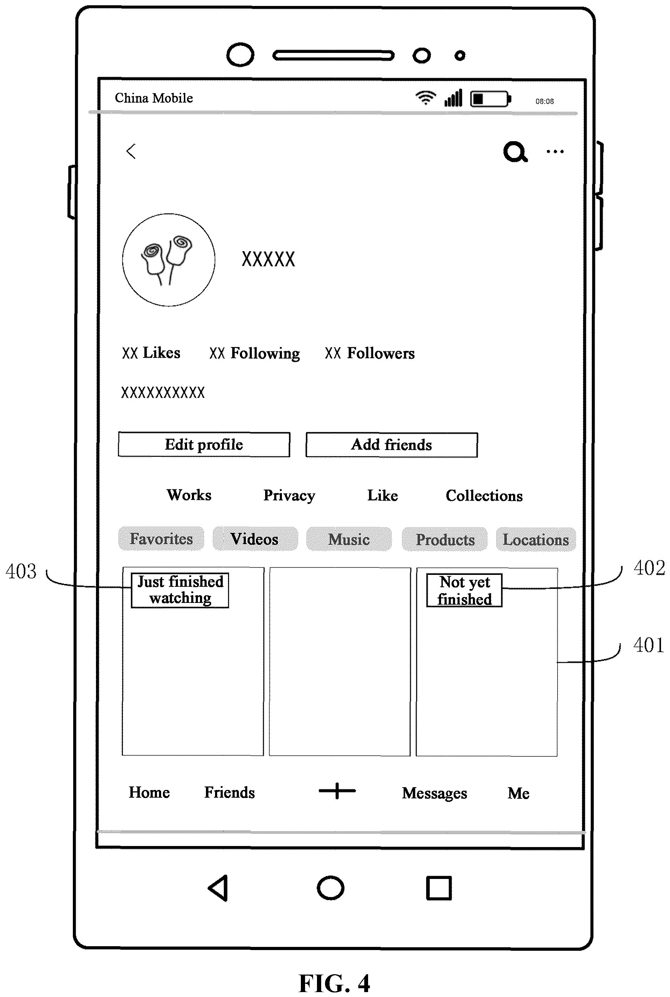

As shown in FIG. 3, FIG. 3 is a schematic diagram of a video playback page according to an embodiment of the present disclosure. A preset control 301 displays identification information "Favorited but not finished watching>". After receiving a trigger operation on the preset control 301, a video playback page of a video to be played shown in FIG. 3 jumps to a personal homepage of a current user. As shown in FIG. 4, FIG. 4 is a schematic diagram of a personal homepage according to an embodiment of the present disclosure, where the personal homepage displays a video that has been favorited by the current user.

In an optional implementation, in response to determining that the video to be played carries the target video identification, a video cover of the video to be played is displayed at a preset playback position of the video playback page of the video to be played, and when a trigger operation on the video cover is received, the video playback page of the video to be played jumps to the personal homepage of the current user.

In the embodiment of the present disclosure, the trigger operation on the video cover may include operations such as a tap operation and a long-pressing operation on the video cover.

In practical applications, to ensure user operating habits, when it is determined that the video to be played carries the target video identification, as shown in FIG. 2, a video cover 202 of the video to be played may be displayed at a corresponding playback position of Tab "Me" on the video playback page of the video to be played, thereby allowing the user to jump from the video playback page of the video to be played to the personal homepage of the current user through the trigger operation on the video cover.

In an optional implementation, after the video playback page of the video to be played jumps to the personal homepage of the current user, to ensure the video playback experience of the current user, a preset first state identification may be displayed on the personal homepage of the current user for the video that has been favorited by the current user and the playback progress for which has not reached the preset progress, where the preset first state identification is configured to prompt that the playback progress of the current user for the video does not reach the preset progress.

As shown in FIG. 4, three videos that have been favorited by the current user are displayed on the personal homepage of the current user, where the playback progress of the video 401 does not reach the preset progress, and therefore a preset first state identification 402 is displayed on a video cover corresponding to the video 401. The preset first state identification may display a prompt text "Not finished" or "Played XX%" to prompt the current user that the playback progress of the video 401 does not reach the preset progress.

In another optional implementation, a preset second state identification may also be displayed on the personal homepage of the current user for the video to be played, where the preset second state identification is configured to prompt playback time information of the current user for the video to be played. After the video playback page of the video to be played jumps to the personal homepage of the current user, as shown in FIG. 4, the preset second state identification 403 is displayed on the cover of the video to be played, where the preset second state identification may display a prompt text "Just watched" to prompt the current user that the whole video to be played has just been watched.

In another optional implementation, after the video playback page of the video to be played jumps to the personal homepage of the current user, to further enhance user experience, a preset prompt animation may also be displayed on the personal homepage of the current user for the video to be played. For example, after the video playback page of the video to be played jumps to the personal homepage of the current user, an enlarged prompt animation may be displayed on the personal homepage of the current user for the video to be played, thereby prompting the current user that the whole video to be played has just been watched.

In practical applications, a back control may also be displayed on the personal homepage of the current user. After receiving a trigger operation on the back control, the personal homepage of the current user jumps back to the video playback page of the video to be played, and on the video playback page, the playback of the video to be played continues, thereby further enriching the method for the user to access the video that has been favorited by the user and the playback progress for which has not reached the preset progress, and enhancing the user experience. The trigger operation on the back control may include operations such as a tap operation and a long-pressing operation on the back control.

Evidently, the embodiment of the present disclosure can achieve the function of jumping from the video playback page of the video to be played to the personal homepage of the current user in response to the trigger operation on the preset control, thereby further enriching the method for the user to access the video that has been favorited by the user and the playback progress for which has not reached the preset progress, and enhancing the user experience.

Additionally, according to the embodiment of the present disclosure, the preset first state identification may also be displayed on the personal homepage of the current user for the video that has been favorited by the user and the playback progress for which has not reached the preset progress, thereby prompting the current user that the playback progress of the video does not reach the preset progress, and then enhancing the user experience.

In practical application, to further enrich the method for the user to access the video that has been favorited by the user and the playback progress for which has not reached the preset progress and enhance the user experience, when it is determined that the video to be played carries the target video identification, the playback progress of the video to be played for the current user is first acquired, and then the playback of the video to be played is resumed based on the playback progress.

For example, when it is determined that the video to be played carries the target video identification, the playback progress of the video to be played for the current user is first acquired. Assuming that the acquired playback progress of the video to be played for the current user is 02:30, the playback of the video to be played is resumed from the 02:30 mark on the video playback page.

In an optional implementation, after acquiring the playback progress of the video to be played for the current user, as shown in FIG. 3, progress prompt information 302 corresponding to the playback progress of the video to be played for the current user may be displayed on the video playback page of the video to be played, where the progress prompt information 302 displays a prompt text "Resumed from last watched position 02:30" to prompt the current user that the video to be played continues to be played from the last watched position.

In another optional implementation, after acquiring the playback progress of the video to be played for the current user, as shown in FIG. 3, a node identification 304 corresponding to the playback progress may be displayed on a playback progress bar 303 of the video to be played, thereby allowing the current user to know the playback progress of the video to be played based on the playback progress bar and the node identification.

In another optional implementation, after acquiring the playback progress of the video to be played for the current user, a preset interactive control may also be displayed at a corresponding preset position above the playback progress bar of the video to be played, and after receiving a trigger operation on the preset interactive control, the current playback progress rapidly jumps to the playback progress of the video to be played for the current user.

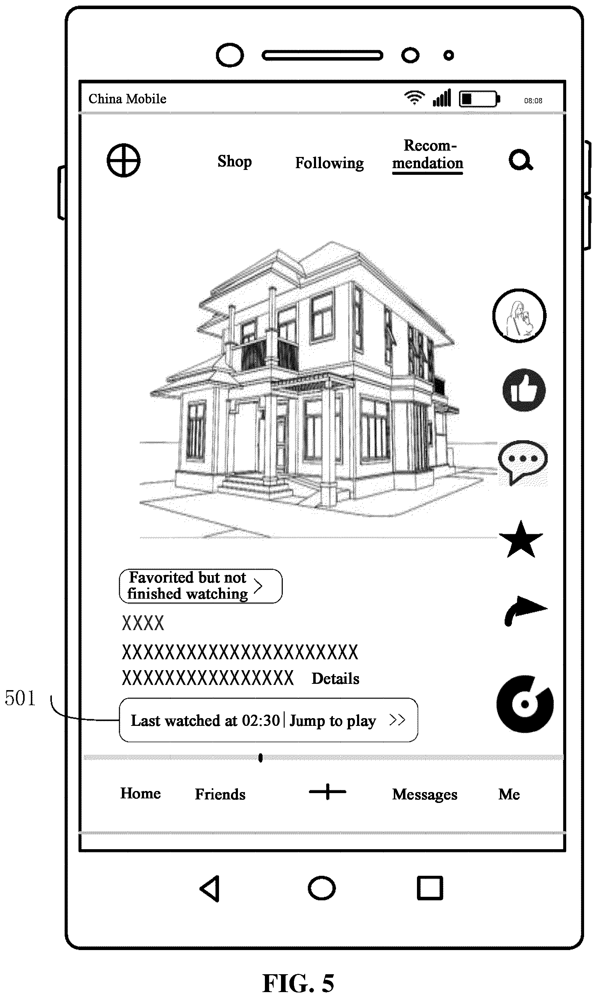

As shown in FIG. 5, FIG. 5 is a schematic diagram of a video playback page according to an embodiment of the present disclosure. A preset interactive control 501 displays a prompt text "Last watched at 02:30 | Jump to play >>" to prompt the current user that through the trigger operation on the preset interactive control, the current playback progress rapidly jumps to the last watched progress. Assuming that the current playback progress of the video to be played is 00:20, after receiving the trigger operation on the preset interactive control 501, the playback quickly jumps from 00:20 to 02:30, and the video to be played continues to be played based on the playback progress of 02:30.

Evidently, according to the video processing method provided in the embodiment of the present disclosure, after acquiring the playback progress of the video to be played for the current user, the playback of the video to be played can be resumed based on the playback progress, thereby further enriching the method for the user to access the video that has been favorited by the user and the playback progress for which has not reached the preset progress, and enhancing the user experience.

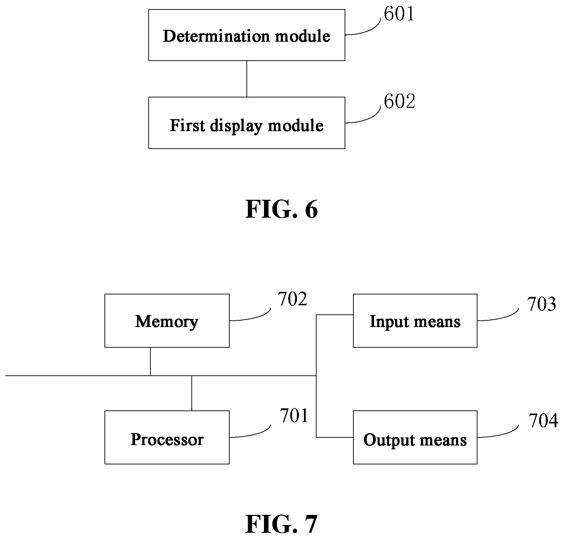

Based on the above method embodiments, the present disclosure further provides a video processing apparatus, applied to a client. Referring to FIG. 6, FIG. 6 is a schematic diagram of a structure of a video processing apparatus according to an embodiment of the present disclosure. The apparatus includes:
a determination module 601, configured to determine whether a video to be played in a current video stream carries a target video identification, where the target video identification is configured to identify a video that has been favorited by a current user and a playback progress for which has not reached a preset progress; and
a first display module 602, configured to display identification information corresponding to the target video identification on a video playback page of the video to be played in response to determining that the video to be played carries the target video identification, where the identification information is configured to prompt that the video to be played is a video that has been favorited by the current user and the playback progress for which has not reached the preset progress.

In an optional implementation, the identification information is displayed on a preset control, and the apparatus further includes:
a first jump module, configured to jump from the video playback page of the video to be played to a personal homepage of the current user in response to a trigger operation on the preset control, where the personal homepage displays a video that has been favorited by the current user.

In an optional implementation, the apparatus further includes:
a second display module, configured to display a video cover of the video to be played at a preset playback position of the video playback page of the video to be played in response to determining that the video to be played carries the target video identification; and
a second jump module, configured to jump from the video playback page of the video to be played to the personal homepage of the current user in response to a trigger operation on the video cover, where the personal homepage displays the video that has been favorited by the current user.

In an optional implementation, the apparatus further includes:
a first acquiring module, configured to acquire a playback progress of the video to be played for the current user in response to determining that the video to be played carries the target video identification; and
a playback module, configured to resume playback of the video to be played based on the playback progress.

In an optional implementation, the apparatus further includes:
a second acquiring module, configured to acquire a playback progress of the video to be played for the current user in response to determining that the video to be played carries the target video identification; and
a third display module, configured to display a node identification corresponding to the playback progress on a playback progress bar of the video to be played, where the node identification is configured to prompt the playback progress of the video to be played for the current user.

In an optional implementation, the apparatus further includes:
a fourth display module, configured to display progress prompt information corresponding to the playback progress of the video to be played for the current user on the video playback page of the video to be played.

In an optional implementation, the apparatus further includes:
a fifth display module, configured to display a preset first state identification on the personal homepage of the current user for the video that has been favorited by the current user and the playback progress for which has not reached the preset progress, where the preset first state identification is configured to prompt that the playback progress of the current user for the video does not reach the preset progress.

In an optional implementation, the apparatus further includes:
a sixth display module, configured to display a preset second state identification on the personal homepage of the current user for the video to be played, where the preset second state identification is configured to prompt playback time information of the current user for the video to be played.

According to the video processing apparatus provided in the embodiment of the present disclosure, firstly, whether the video to be played in the current video stream carries the target video identification is determined, where the target video identification is configured to identify the video that has been favorited by the current user and the playback progress for which has not reached the preset progress; and in response to determining that the video to be played carries the target video identification, the identification information corresponding to the target video identification is displayed on the video playback page of the video to be played, where the identification information is configured to prompt that the video to be played is a video that has been favorited by the current user and the playback progress for which has not reached the preset progress. Evidently, according to the embodiment of the present disclosure, the video that has been favorited by the user and the playback progress for which has not reached the preset progress can be displayed to the user based on the current video stream. Compared with the access method for the above type of video in the prior art, the embodiment of the present disclosure enriches the method for the user to access this type of video, thereby enhancing the video playback experience of the user.

In addition to the above method and apparatus, an embodiment of the present disclosure further provides a computer-readable storage medium. The computer-readable storage medium has instructions stored therein. The instructions, when running on a terminal device, cause the terminal device to implement the video processing method according to the embodiments of the present disclosure.

An embodiment of the present disclosure further provides a computer program product. The computer program product includes a computer program/instruction. The computer program/instruction, when executed by a processor, implements the video processing method according to the embodiments of the present disclosure.

Additionally, an embodiment of the present disclosure further provides a video processing device, and as shown in FIG. 7, may include:
a processor 701, a memory 702, an input means 703, and an output means 704. There may be one or more processors 701 in the video processing device, with FIG. 7 illustrating an example of a single processor. In some embodiments of the present disclosure, the processor 701, the memory 702, the input means 703, and the output means 704 may be connected through a bus or other methods. Bus connection is used as an example in FIG. 7.

The memory 702 may be configured to store software programs and modules. The processor 701 performs various functional applications and data processing of the video processing device by running the software programs and the modules stored in the memory 702.The memory 702 may mainly include a program storage area and a data storage area, where the program storage area may store an operating system, an application program needed by at least one function, etc. In addition, the memory 702 may include a high-speed random access memory, and may further include a nonvolatile memory, such as at least one magnetic disk storage device, at least one flash memory, or at least one another volatile solid-state storage device. The input means 703 may be configured to receive inputted number or character information and generate signal inputs relevant to user settings and function control of the video processing device.

Specifically, in the embodiment, the processor 701 may load executable files corresponding to processes of one or more application programs into the memory 702 according to following instructions, and the processor 701 runs the application programs stored in the memory 702, thereby implementing various functions of the above video processing device.

It should be noted that herein, relational terms such as "first" and "second" are used only to distinguish one entity or operation from another and do not necessarily require or imply any actual relationship or order between these entities or operations. In addition, the terms "comprise", "include", or any other variations thereof are intended to cover non-exclusive inclusions, and therefore a process, a method, an article, or a device including a series of elements not only includes those elements but also includes other elements not clearly listed, or further includes elements inherent to the process, the method, the article, or the device. In the absence of further restrictions, an element specified by the phrase "including a..." does not exclude the existence of other identical elements in the process, the method, the article, or the device that includes the element.

The above contents are merely specific implementations of the present disclosure, such that those skilled in the art can understand or implement the present disclosure. More modifications for these embodiments are apparent to those skilled in the art, and general principles defined herein may be implemented in other embodiments without departing from the spirit or scope of the present disclosure. Therefore, the present disclosure will not be limited by these embodiments described herein but is required to conform to a widest scope consistent with the principles and novel characteristics disclosed herein.

## Claims

1. A video processing method, comprising:
determining whether a video to be played in a current video stream carries a target video identification, wherein the target video identification is configured to identify a video that has been favorited by a current user and a playback progress for which has not reached a preset progress; and
displaying, on a video playback page of the video to be played, identification information corresponding to the target video identification in response to determining that the video to be played carries the target video identification, wherein the identification information is configured to prompt that the video to be played is a video that has been favorited by the current user and the playback progress for which has not reached the preset progress.

2. The method of claim 1, wherein the identification information is displayed on a preset control, and the method further comprises:
jumping from the video playback page of the video to be played to a personal homepage of the current user in response to a trigger operation on the preset control, wherein the personal homepage displays a video that has been favorited by the current user.

3. The method of claim 1, further comprising:
displaying a video cover of the video to be played at a preset playback position of the video playback page of the video to be played in response to determining that the video to be played carries the target video identification; and
jumping from the video playback page of the video to be played to a personal homepage of the current user in response to a trigger operation on the video cover, wherein the personal homepage displays a video that has been favorited by the current user.

4. The method of claim 1, further comprising:
acquiring a playback progress of the video to be played for the current user in response to determining that the video to be played carries the target video identification; and
resuming playback of the video to be played based on the playback progress.

5. The method of claim 1, further comprising:
acquiring a playback progress of the video to be played for the current user in response to determining that the video to be played carries the target video identification; and
displaying, on a playback progress bar of the video to be played, a node identification corresponding to the playback progress, wherein the node identification is configured to prompt the playback progress of the video to be played for the current user.

6. The method of claim 4 or 5, wherein after the acquiring a playback progress of the video to be played for the current user, the method further comprises:
displaying, on the video playback page of the video to be played, progress prompt information corresponding to the playback progress of the video to be played for the current user.

7. The method of claim 2 or 3, wherein after the jumping from the video playback page of the video to be played to a personal homepage of the current user, the method further comprises:
displaying, on the personal homepage of the current user, a preset first state identification for a video that has been favorited by the current user and a playback progress for which has not reached the preset progress, wherein the preset first state identification is configured to prompt that a playback progress of the current user for the video does not reach the preset progress.

8. The method of claim 2 or 3, wherein after the jumping from the video playback page of the video to be played to a personal homepage of the current user, the method further comprises:
displaying, on the personal homepage of the current user, a preset second state identification for the video to be played, wherein the preset second state identification is configured to prompt playback time information of the current user for the video to be played.

9. A video processing apparatus, comprising:
a determination module, configured to determine whether a video to be played in a current video stream carries a target video identification, wherein the target video identification is configured to identify a video that has been favorited by a current user and a playback progress for which has not reached a preset progress; and
a first display module, configured to display identification information corresponding to the target video identification on a video playback page of the video to be played in response to determining that the video to be played carries the target video identification, wherein the identification information is configured to prompt that the video to be played is a video that has been favorited by the current user and the playback progress for which has not reached the preset progress.

10. A computer-readable storage medium, having instructions stored therein, wherein the instructions, when running on a terminal device, cause the terminal device to implement the method of any of claims 1 to 8.

11. A video processing device, comprising: a memory, a processor, and a computer program stored on the memory and runnable on the processor, wherein the processor, when executing the computer program, implements the method of any of claims 1 to 8.
